# EUROPEAN PATENT SPECIFICATION

(11) **EP 1 308 674 B1**
(45) Date of publication and mention of the grant of the patent: **23.01.2008**
(21) Application number: 02257449.5
(22) Date of filing: 25.10.2002
(51) Int. Cl.: F23R 3/48

(54) **Bellows type outer crossfire tube**
Balgartiges Überschlagrohr
Tube d'interconnexion à soufflets

(30) Priority: 31.10.2001 US 984872
(43) Date of publication of application: 07.05.2003
(73) Proprietor: GENERAL ELECTRIC COMPANY, Schenectady, NY 12345 (US)
(72) Inventor: Tilson, Keith, Nottingham NG8 1JW (GB); Morton, Harmon Lindsay, Simpsonville, South Carolina 29681 (US); Elliot, Richard Anthony, Acworth, Georgia 30101 (US)
(74) Representative: Pedder, James Cuthbert

(56) References cited:
- US-A- 2 437 385
- US-A- 2 722 803
- US-A- 4 249 372
- US-A- 5 361 577
- US-A- 5 402 635
- US-A- 5 427 419
- US-A- 5 427 866
- US-A- 5 603 531

## Description

This invention relates to crossfire tubes extending between adjacent combustors in a land-based gas turbine.

The annular arrangement of combustors in a stationary, or land-based gas turbine with interconnecting crossfire tubes is generally well known as disclosed in, for example, commonly owned u.s. patent no. 4,249,372. The '372 patent describes a typical cross ignition assembly that includes tubular members extending between aligned openings in adjacent combustors, and held in place by means that position the opposite ends of the tubular members or crossfire tubes in fluid communication with the adjacent combustion chambers. The purpose of the crossfire tubes is to provide for the ignition of fuel in one combustion chamber from ignited fuel in an adjacent combustion chamber, thereby eliminating the need for a separate igniter in each combustor. Specifically, chamber to chamber crossfire is accomplished by a pressure pulse of hot gases transferring from a firing chamber to an unfired chamber through the crossfire tube. The crossfire tubes also serve the purpose of equalizing to some extent the pressures between combustion chambers.

Concerns have existed with respect to increased temperatures and pressures in modern turbomachinery resulting in instances of leakage and/or blowout with existing crossfire tube designs. Various crossfire tube configurations have been utilized. For example, convoluted bellows type crossfire tubes have been tried, and are described in commonly owned u.s. patent no. 5,361,577. A flexible crossfire tube construction is described in u.s. patent no. 3,991,560. These designs may be considered overly complex however, increasing cost and installation time.

This invention relates to a bellows type outer crossfire tube that is of simplified design and construction. The outer crossfire tube houses an inner crossfire tube that transmits the hot gas pressure pulse during crossfire. The inner crossfire tube is unchanged and is thus not a part of the invention. The bellows configuration for the outer tube is designed to provide a reduction in part count and thus a reduction in installation/removal and associated field service costs. In the preferred arrangement, the outer crossfire tube is generally cylindrical in shape and includes a bellows portion and a pair of uniform diameter free ends on opposite sides of the bellows portion. The free ends are adapted to seat, under compression, within respective apertures provided in adjacent combustor flanges. The design is particularly useful as a retrofit component for existing turbines, with an analytical design life of 2400 cycles and 48,000 hours. The design accommodates lateral and axial deflections due to tolerance stack-ups and expansions, and the construction materials are selected to meet operating specifications.

The outer crossfire tube is preferably utilized in combination with an outer sleeve assembly that surrounds the outer crossfire tube and is made up of a pair of telescoping sleeve members, each welded to a respective one of the combustor flanges.

Accordingly, in one aspect, the invention relates to a crossfire tube comprising: a substantially cylindrical bellows portion; a pair of uniform diameter free ends on opposite sides of said bellows portion, said uniform diameter free ends adapted to be seatable within apertures provided in adjacent combustors in a land based gas turbine, said bellows portion extending from one of said free ends to the other of said free ends; and a pair of telescoping sleeve members adapted to surround the cross fire tube proper, respective ones of said pair of telescoping sleeve members being adapted to be securable to the adjacent combustors.

The crossfire tube may be constructed of a nickel alloy and capable of withstanding temperatures up to 418°C (784°F) and internal pressures up to 1709900 pascals (248 psi).

The diameters of said substantially uniform diameter free ends may be substantially identical to an inner diameter of said bellows portion.

In a further aspect, the present invention provides a combustor assembly comprising a cross fire tube as above and at least a pair of adjacent combustors provided with flanges formed with said apertures therein, wherein said flanges are constructed of a chromium molybdenum alloy.

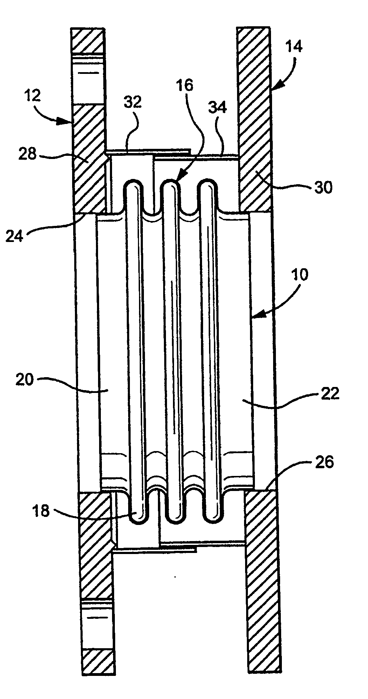

The invention will now be described in greater detail, by way of example, with reference to the drawings, the single figure of which is a side elevation partly in section, of an outer crossfire tube in accordance with one exemplary embodiment of the invention.

With reference to the drawing, an outer crossfire tube 10 is shown, in place, between a pair of adjacent combustors 12 and 14. As noted above, the inner crossfire tube is not part of this invention and is thus not shown in the drawing. The outer crossfire tube 10 is generally cylindrical in shape and includes a bellows portion 16 that extends the majority of the axial or length dimension of the tube. The bellows portion is of typical bellows construction with inner and outer diameters as defined by the axially spaced convolutions 18. A pair of uniform diameter free ends 20, 22 are located on opposite sides of the bellows portion. The respective diameters of these free ends are substantially identical to the inner diameter of the bellows portion 16.

The free ends 20, 22 are adapted to fit within a pair of correspondingly shaped apertures 24, 26, respectively, formed in flanges 28, 30 of the adjacent combustors 12, 14. Flanges 28, 30 are preferably chromium molybdenum alloys, with six bolt holes per flange, the latter utilized to secure the flanges to the combustors.

The crossfire tube, and specifically the bellows portion 16, is under compression when located in the apertures 22, 24, thus ensuring that it will remain in place during operation. The number of ripples or convolutions in the bellows portion 16 is application specific. Critical design parameters for the tube 10 include sufficient strength to sustain the pressure load across the tube, and a natural frequency that differs from that of the combustors so that the crossfire tube will not vibrate in synch with the combustors 12, 14. In the preferred embodiment, the crossfire tube 10 is constructed of a suitable ni alloy, although other suitable alloys may be employed. The preferred embodiment is designed to withstand internal pressures and temperatures throughout the operating or working range up to about 418°C (784°F) and 1709900 pascals (248 psi).

A pair of telescoping sleeve members 32, 34 are welded to respective combustor flanges 28, 30 and are thus able to move or vibrate axially relative to each other. The sleeve members 32, 34 surround and protect the outer crossfire tube 10 and have length dimensions determined by combustor spacing. The preferred material for the sleeves is 321 stainless steel.

The above described outer crossfire tube is a simple yet reliable design, eliminating previously required parts, reducing costs and installation time. It is particularly advantageous as a retrofit to existing combustors.

## Claims

1. An assembly comprising a crossfire tube (10) having :
a substantially cylindrical bellows portion (16);
a pair of uniform diameter free ends (20, 22) on opposite sides of said bellows portion (16), said uniform diameter free ends (20, 22) adapted to be seatable within apertures provided in adjacent combustors in a land based gas turbine, the assembly further comprising
a pair of telescoping sleeve members (32, 34) adapted to surround the cross fire tube (10) proper, respective ones of said pair of telescoping sleeve members (32, 34) being adapted to be securable to the adjacent combustors.

2. The assembly of claim 1 in which the crossfire tube (10) is constructed of a nickel alloy and is capable of withstanding temperatures up to 418°C (784°F) and internal pressures up to 1709900 pascals (248 psi).

3. The assembly of claim 1 or 2 wherein diameters of said substantially uniform diameter free ends (20, 22) are substantially identical to an inner diameter of said bellows portion (16).

4. A combustor comprising an assembly of any one of claims 1 to 3 and at least a pair of adjacent combustors provided with flanges (28, 30) formed with said apertures therein, wherein said flanges are constructed of a chromium molybdenum alloy.

## Patentansprüche

1. Anordnung die ein Querzündrohr (10) enthält, zu dem gehören:
ein im Wesentlichen zylindrischer Faltenbalgabschnitt (16);
ein Paar mit einheitlichem Durchmesser bemessene freie Enden (20, 22) an entgegensetzten Seiten des Faltenbalgabschnitts (16), wobei die mit einheitlichem Durchmesser bemessenen freien Enden (20, 22) dazu eingerichtet sind, einen Sitz in Öffnungen zu finden, die in benachbarten Brennkammern in einer auf dem Boden betriebenen Gasturbine vorgesehen sind, wobei zu der Anordnung ferner gehören:
ein Paar Teleskophülsenelemente (32, 34), die dazu eingerichtet sind, das eigentliche Querzündrohr (10) zu umgeben, wobei entsprechende des Paars von Teleskophülsenelementen (32, 34) dazu eingerichtet sind, sich gesichert an den benachbarten Brennkammern anbringen zu lassen.

2. Anordnung nach Anspruch 1, die basierend auf einer Nickellegierung hergestellt ist und bei der das Querzündrohr (10) in der Lage ist, Temperaturen bis zu 418 °C (784°F) und inneren Druckwerten bis zu 1.709.900 Pascal (248 psi) standzuhalten.

3. Anordnung nach Anspruch 1 oder 2, bei der die Durchmesser der im Wesentlichen mit einheitlichem Durchmesser bemessenen freien Enden (20, 22) im Wesentlichen identisch zu einem Innendurchmesser des Faltenbalgabschnitts (16) sind.

4. Brennkammer, die eine Anordnung nach einem der Ansprüche 1 bis 3 und wenigstens ein Paar benachbarte Brennkammern aufweist, die mit Flanschen (28, 30) versehen sind, die mit den Öffnungen darin ausgebildet sind, wobei die Flansche basierend auf einer Chrom-Molybdänlegierung hergestellt sind.

## Revendications

1. Ensemble comprenant un tube de raccordement (10) ayant :
une partie soufflet substantiellement cylindrique (16) ;
une paire d'extrémités libres de diamètre identique (20, 22) de part et d'autre de ladite partie soufflet (16), lesdites extrémités libres de diamètre identique (20, 22) étant adaptées pour pouvoir être logées dans des ouvertures prévues dans des chambres de combustion adjacentes dans une turbine à gaz terrestre, l'ensemble comprenant en outre :
une paire d'éléments de manchon télescopiques (32, 34) adaptés pour entourer le tube de raccordement (10), les éléments de manchons télescopiques respectifs et propres (32, 34) étant adaptés pour pouvoir être fixés aux chambres de combustion adjacentes.

2. Ensemble selon la revendication 1, dans lequel le tube de raccordement (10) est fait d'un alliage de nickel et est capable de supporter des températures allant jusqu'à 418 °C (784 °F) et des pressions internes allant jusqu'à 1 709 900 pascals (248 psi).

3. Ensemble selon la revendication 1 ou 2, dans lequel les diamètres desdites extrémités libres de diamètre sensiblement identique (20, 22) sont sensiblement identiques à un diamètre intérieur de ladite partie soufflet (16).

4. Chambre de combustion comprenant un ensemble selon l'une quelconque des revendications 1 à 3 et au moins une paire de chambres de combustion pourvues de brides (28, 30) dans lesquelles sont pratiquées lesdites ouvertures, lesdites brides étant faites d'un alliage de chrome et de molybdène.
